# EUROPEAN PATENT APPLICATION

(11) **EP 1 162 054 A1**
(43) Date of publication of application: **12.12.2001**
(21) Application number: 00974949.0
(22) Date of filing: 13.11.2000
(51) Int. Cl.: B29C 59/00, B60R 21/20, G01B 11/06

(54) **METHODS OF FORMING LINEAR GROOVE IN CAR SKIN AND MEASURING/RECORDING RESIDUAL WALL THICKNESS AND DEVICE THEREFOR**

(30) Priority: 17.11.1999 JP 32669799
(71) Applicant: Pearl Kogyo Co., Ltd, Osaka-shi, Osaka 559-0015 (JP)
(72) Inventor: IKAWA, Mikihiro, Pearl Kogyo Co., Ltd., Osaka-shi, Osaka 559-0015 (JP)
(74) Representative: Fleuchaus, Leo, Dipl.-Ing.
(86) International application number: JP0007980
(87) International publication number: WO0136180

(57) **Abstract**

In the invention, an ultrasonic processing apparatus (4) is moved along a planned groove process line and along the side of a rear face (3b) of a resin skin (3) which is fixedly held so that the front face is closely in contact with a flat face (1a) of a surface table (1), so that a resin for the skin is sequentially fused by ultrasonic vibration to process a wide linear groove (6). An image of a residual portion (6d) of a bottom portion of the linear groove (6) is taken in one direction on the groove opening side by using a laser displacement sensor and CCD camera 10, and the image is processed. The thickness of the residual portion (6d) is measured and recorded so as to be effectively used as a feedback material for processing the linear groove (6) with high reproducibility.

## Description

### Technical Field

The present invention relates to a method of processing a linear groove for, in order to ensure the safety of passengers upon a collision of a vehicle, allowing an air bag portion of a skin made of a resin such as polyvinyl chloride (PVC), polyolefine (TPO), polyurethane (TPU) which forms, for example, an instrument panel of the vehicle to break so as to inflate and deploy an air bag when a destructive force of a predetermined or higher level is applied to the air bag portion upon a collision or the like, and measuring and recording a thickness of a residual portion of a bottom portion of the linear groove after the processing, and also to an apparatus for the same.

### Background Art

A linear groove which is processed to an air bag portion of a resin skin for a vehicle closely relates to the safety of passengers. Therefore, it is requested to process a linear groove while a predetermined thickness which is uniform over the whole length of the groove bottom portion is left so as to, even when the thickness of the skin material is somewhat dispersed, exert a constant breakage resistance which is reproducible. In order to adequately control the processing quality of mass-produced skins so as to satisfy the requirement, it is important to accurately measure the thickness of the residual portion of the bottom portion of a processed linear groove, and to record and store the data for respective processed products.

As means for processing a linear groove to the rear face or the front face of a skin, conventionally, known are means such as means for processing a linear groove by mechanically cutting away a resin material with a knife-like cutter or the like, and means for processing a linear groove by irradiating a portion to be processed of the skin with a laser beam to locally burn and remove a resin material of the portion, as disclosed in, for example, Japanese Patent Application Laying-Open No. 10-85966. In both the cases, used is a light transmission-type measuring apparatus which, after a linear groove is processed, measures the thickness of the residual portion by illuminating from the side of one face of the skin, i.e., the opening side of the groove toward the groove bottom portion, and measuring the amount of light transmitted to the side of another face of the skin.

In a linear groove which is processed by such mechanical cutting means or burning and removing means based on a laser beam, however, the groove width is usually narrow, and the groove width becomes narrower because opposite faces on both sides of the groove come into close contact with each other due to an elastic force of the resin material immediately after the process. Therefore, it is very difficult to specify the illumination position with respect to the groove. When the material of the skin is changed, moreover, the amount of transmitted light tends to be largely varied. Therefore, an error easily occurs in measurement of the thickness of the residual portion, with the result that it is impossible to adequately perform the quality control.

In a light transmission-type measuring apparatus, a light projection portion and a light receiving portion must be respectively disposed on both the front and rear sides of a skin, and, on the other hand, the groove processing is requested to be performed while the skin which is to be processed and which is flexible is fixedly in close contact with a flat face such as a surface table so as to prevent the skin from being accidentally moved or bent. Therefore, the light projection portion and the light receiving portion of the measuring apparatus cannot be disposed on both the front and rear sides of a groove processed place of a skin which is closely fixed to a flat face such as a surface table. Consequently, it is required that the light projection portion and the light receiving portion are placed on both the front and rear sides of a place separated from a groove processed place, and measurement is then performed in the separated place. Alternatively, the thïckness of a residual portion must be measured in a step other than the step of processing a groove. As a result, there arise problems in that the apparatus tends to have a very complicated structure, and that steps for measurement are increased and the working efficiency is correspondingly lowered.

### Disclosure of Invention

The invention has been conducted in view of the circumstances described above. It is an object of the invention to provide a method of processing a linear groove to a skin for a vehicle and measuring and recording a residual thickness which can measure and record easily, efficiently, and accurately the thickness of a residual portion of a bottom portion of the processed linear groove in steps continuous to the groove processing to contribute to implementation of adequate quality control, and also an apparatus for the method.

The method of processing a linear groove to a skin for a vehicle and measuring and recording a residual thickness according to the invention is a method of processing a linear groove to an air bag portion of a resin skin for a vehicle in a condition where a predetermined thickness is left, and measuring and recording a thickness of a residual portion of a bottom portion of a processed linear groove, characterized in that a linear groove is processed to another face of a skin which is fixedly held so that one of front and rear face is closely in contact with a flat face, by using a groove processing apparatus which is disposed on a side of the other face, in a condition where the groove is wide and a predetermined thickness is left in a bottom portion of the groove; an image of a residual portion of the bottom portion of the linear groove is then taken from an opening side of the processed linear groove by using a laser displacement sensor and CCD camera; the thickness of the residual portion is measured by processing the taken image; and a measured value is recorded.

The apparatus for processing a linear groove to a skin for a vehicle and measuring and recording a residual thickness according to the invention is an apparatus for processing a linear groove to an air bag portion of a resin skin for a vehicle in a condition where a predetermined thickness is left, and measuring and recording a thickness of a residual portion of a bottom portion of a processed linear groove, characterized in that the apparatus comprises: a surface table which fixedly holds the skin so that one of front and rear faces thereof is closely in contact with a flat face; a groove processing apparatus which is disposed on a side of another face of the skin, and which processes a linear groove to the side of the face in a condition where the groove is wide and a predetermined thickness is left in a bottom portion; a processing position moving mechanism which relatively moves the groove processing apparatus and the surface table in a direction of a linear groove to be processed; a laser displacement sensor and CCD camera which is disposed on a lower side in a moving direction of the groove processing apparatus, and which takes an image of a residual portion of a bottom portion of the linear groove from an opening side of the processed linear groove; and image processing means and recording means for measuring a thickness of the residual portion by processing the taken image, and recording a measured value.

According to the invention with the above-mentioned configuration requirements, to another or non-contacting face of a skin which is fixedly held so that one of the front and rear faces is closely in contact with the flat face, a linear groove which has a residual portion of a predetermined thickness of a bottom portion is processed in a large width by using the groove processing apparatus, whereby images of only a required specific place, i.e., the residual portion of the groove bottom portion after processing can be taken by using the laser displacement sensor and CCD camera in an easy and correct manner from one direction on the side of the wide groove opening portion, and in an efficient manner in a series of steps continuous to the groove processing. Furthermore, by processing images which are taken from only a required specific place, the thickness of the residual portion can be accurately measured and recorded irrespective of the quality of the material of the skin. Since such accurate measurement and recording are enabled, it is possible to attain an effect that the recorded data can be effectively used as a feedback material for, with high reproducibility, processing a linear groove having a predetermined thickness which is uniform over the whole length so as to exert a constant breakage resistance, and the quality control of all mass-produced processed products can be adequately performed.

As the groove processing apparatus in the method of processing a linear groove to a skin for a vehicle and measuring and recording a residual thickness, and the apparatus for the method, an ultrasonic processing apparatus may be used which applies ultrasonic vibration to the skin to sequentially fuse and remove a resin for the skin. According to this configuration, a wide linear groove which enables such accurate thickness measurement and recording can be processed in a very economical manner with reduced power consumption, and in an efficient manner by one tracing, and the residual thickness can be measured and recorded more accurately without causing a measurement error due to entering of foreign materials such as soot into the processed groove.

In the method of processing a linear groove to a skin for a vehicle and measuring and recording a residual thickness, when the linear groove is processed to the rear-face side of the skin, the groove is not exposed to the front-face side of the skin which is a design face in an actual use mode. In the case where an ultrasonic processing apparatus is used as the groove processing apparatus for the rear-face side, particularly, a predetermined linear groove can be processed while surely avoiding a processing trace damage on the design face.

### Brief Description of Drawings

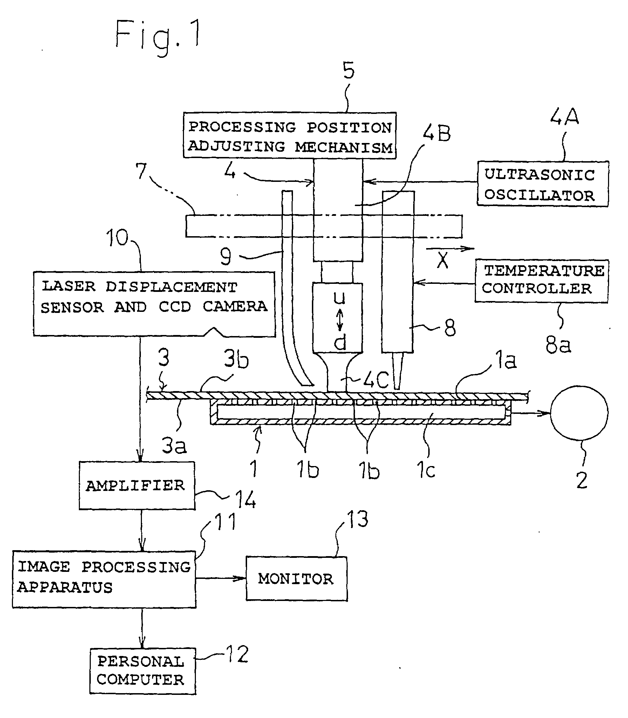

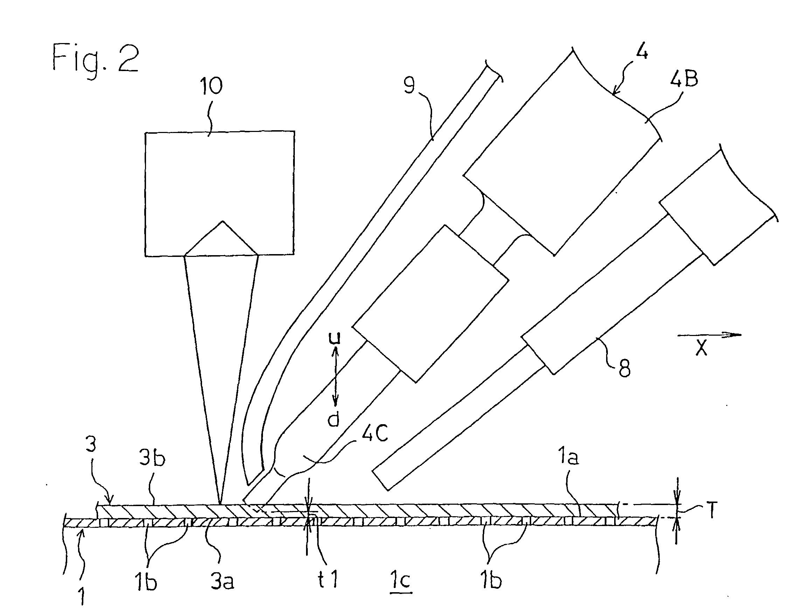

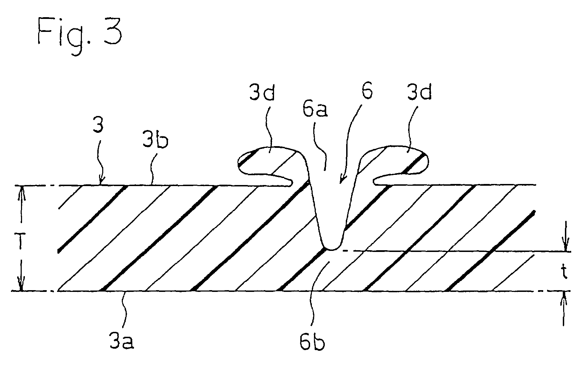

Fig. 1 is a schematic configuration diagram of the whole of a processing apparatus which is used in implementation of the method of processing a linear groove to an air bag portion of a skin for a vehicle according to the invention, Fig. 2 is an enlarged side view of main portions of Fig. 1, and Fig. 3 is an enlarged vertical longitudinal section view of main portions illustrating a processed linear groove and its periphery.

### Best Mode for Carrying Out the Invention

Hereinafter, an embodiment will be described. Fig. 1 is a schematic configuration diagram of the whole of an apparatus for processing a linear groove and measuring and recording a residual thickness, and Fig. 2 is an enlarged side view of main portions thereof. In Fig. 1 and Fig. 2, a large number of small holes 1b ... are formed in a flat upper face 1a of a surface table 1. The air in a cavity 1c of the surface table 1 is sucked by a vacuum generator 2 such as a vacuum pump, so as to reduce the pressure thereof, whereby an air bag portion of a resin skin 3 for a vehicle placed on the flat upper face 1a is attracted via the small holes 1b .... Therefore, the skin 3 can be fixedly held to the surface table 1 so that the front face 3a of the skin 3 is closely in contact with the flat upper face 1a.

As an example of the groove processing apparatus, an ultrasonic processing apparatus 4 for applying ultrasonic vibration to a resin for a skin is disposed above the surface table 1 on the side of the rear face 3b of the skin 3 which is fixedly held to the surface table 1. The ultrasonic processing apparatus 4 is configured by an ultrasonic oscillator 4A with an oscillating frequency of 20 to 40 KHz, an ultrasonic transducer 4B, and an oscillating horn 4C in which a cutting blade is integrally cut from an iron alloy and a titanium alloy. As the oscillating horn 4C of the ultrasonic processing apparatus 4, a plurality of types having different widths and shapes are prepared. The plurality of types of oscillating horns 4C are attached to the ultrasonic transducer 4B so as to be replaceable in an alternative way.

The ultrasonic transducer 4B and the oscillating horn 4C of the ultrasonic processing apparatus 4 are mounted on a processing position adjusting mechanism 5 which can move the position of the front end of the oscillating horn 4C in the thickness direction (the direction indicated by the arrow u-d) of the skin 3 so that a clearance t1 between the front end of the oscillating horn 4C and the flat upper face 1a of the surface table 1 coincides with a predetermined thickness t (see Fig. 3) which is to be left on the side of the front face 3a of the skin 3. When the thickness T of the skin 3 which is previously known or detected in processing is input, the processing position adjusting mechanism 5 moves and adjusts the position of the front end of the oscillating horn 4C to a position at a height that is obtained by subtracting the residual thickness t from the thickness T of the skin 3 with setting the table flat face 1a as a reference face (zero) . Specifically, the processing position adjusting mechanism 5 is a well-known mechanism in which an expanding and contracting apparatus such as a cylinder and a control section which calculates and outputs a required moving amount are combined with each other. Therefore, the description and illustration of the specific structure are omitted.

The ultrasonic processing apparatus 4 and the processing position adjusting mechanism 5 are mounted on a processing position moving mechanism 7 which is driven to be movable in a direction (in the direction indicated by the arrow X) of a linear groove 6 (see Fig. 3) that is to be processed on the side of the rear face 3b of the air bag portion of the skin 3, with respect to the surface table 1. As the processing position moving mechanism 7, a well-known conveyer, for example, a belt conveyer, or a chain conveyer can be employed. Thus, the description and illustration of the specific structure are omitted.

On the upper side of the processing position moving direction X of the ultrasonic processing apparatus 4, as a heating apparatus which previously heats a portion to be processed of the skin 3 immediately before the application of the ultrasonic vibration, a hot-air generator 8 with a temperature controller 8a which blows hot air to the rear face 3b of the skin 3 is disposed. On the lower side of the processing position moving direction X of the ultrasonic processing apparatus 4, a cooling air ejecting apparatus 9 for blowing cooling air to the portion of the rear face 3b of the skin 3 immediately after the ultrasonic processing is disposed. In addition, directly behind the cooling air ejecting apparatus 9, for example, there is disposed an apparatus for measuring and recording the residual thickness t of the linear groove 6 processed in the rear face 3b of the skin 3 from the side of the rear face 3b of the skin. As a heating apparatus for previously heating the portion to be processed of the skin 3, instead of the hot-air generator 8, an electric heater or the like may be employed.

The apparatus which measures and records the residual thickness t of the linear groove 6 comprises: a laser displacement sensor and CCD camera 10 which irradiates a residual portion 6b of a bottom portion of the groove 6 from the side of the opening portion 6a of the groove with a large number of laser spots of a minute diameter, and takes images of the residual portion 6b while detecting displacements of multiple points; an image processing apparatus 11 which processes the images taken by the CCD camera 10 to find the maximum displacement point from the displacements of the multiple points, and detects (measures) the minimum thickness of the residual portion 6b; a personal computer 12 which totalizes, records, and stores the minimum thickness detected by the image processing apparatus 11 for respective products (skins); and a monitor 13 which displays the current detection state on a screen. In FIG. 1, 14 denotes an amplifier. The hot-air generator 8, the cooling air ejecting apparatus 9, and the laser displacement sensor and CCD camera 10 are configured so that they are integrally moved in the processing position moving direction X together with the ultrasonic processing apparatus 4 via the processing position moving mechanism 7.

Next, a method of processing a linear groove 6 to an air bag portion of the skin 3 for a vehicle by using the processing apparatus with the above-described configuration, and measuring and recording the thickness of the residual portion 6b of the bottom portion will be described.

First, a portion to be processed (the air bag portion) of the resin skin 3 is placed on the flat upper face 1a of the surface table 1 with directing downward the front face 3a of the portion. By sucking the air in the cavity 1c and reducing the pressure by the vacuum generator 2, the portion to be processed of the resin skin 3 is attracted via the small holes 1b ..., whereby the skin 3 is fixedly held to the surface table 1 so that the front face 3a is closely in contact with the flat upper face 1a.

Next, in accordance with the thickness T of the skin 3 to be processed, the ultrasonic transducer 4B and the oscillating horn 4C of the ultrasonic processing apparatus 4 are moved via the processing position adjusting mechanism 5 in the thickness direction of the skin 3 (the direction indicated by the arrow u-d) with setting the flat upper face 1a of the surface table 1 as a reference face (zero) so that the clearance t1 between the front end of the oscillating horn 4C and the flat upper face 1a of the surface table 1 coincides with the predetermined thickness t to be left on the side of the front face 3a of the skin 3. Thus, the processing position by the ultrasonic processing apparatus 4 is initially adjusted.

Thereafter, via the processing position moving mechanism 7, the ultrasonic processing apparatus 4 is integrally moved together with the hot-air generator 8, the cooling air ejecting apparatus 9, and the laser displacement sensor and CCD camera 10 in the processing position moving direction X. In accordance with the movement, the hot air generated by the hot-air generator 8 is blown to the rear face 3b of the skin 3, so that the portion to be processed of the skin 3 immediately before the ultrasonic processing is previously heated and softened. Then, ultrasonic vibration is applied to the softened portion via the oscillating horn 4C, so that the wide linear groove 6 in which the predetermined thickness t is left is processed on the side of the front face 3a of the skin 3. Accordingly, stress in the processing is dispersed, and damages to the design face on the side of the front face 3a of the skin 3 can be avoided.

As apparently shown in Fig. 3, a resin portion 3d which is sequentially fused with the ultrasonic processing by applying ultrasonic vibration is removed onto the rear face 3b of the skin on both sides of the processed linear groove 6. The resin portion 3d is immediately hardened in this position by the cooling air blown from the cooling air ejecting apparatus 9. Therefore, the fused resin portion 3d will not enter the processed linear groove 6, so that the linear groove 6 of a large width can be surely processed.

Immediately after the completion of the ultrasonic processing, the laser displacement sensor and CCD camera 10 irradiates the residual portion 6b of the bottom portion of the groove 6 from the side of the opening portion 6a of the groove with a large number of laser spots of a minute diameter, and takes images of the residual portion 6b while detecting displacements of multiple points. The taken images are sent to the image processing apparatus 11 to be processed, whereby the maximum displacement point is found from the displacements of multiple points, and the minimum thickness of the residual portion 6b is detected (measured). The detected residual thickness t is totalized for each product (skin), and then recorded and stored in the personal computer 12. This is effectively used as the material for quality control of processed products.

In the above embodiment, the case where the ultrasonic processing apparatus 4 is used as the groove processing apparatus has been described. As far as the wide linear groove 6 which allows the thickness of the residual portion 6b from the side of the groove opening portion 6a can be processed, any one of mechanical cut processing means and burning and removing means based on a laser beam may be used.

In the above embodiment, the case where, from the viewpoint of design, the linear groove 6 is processed to the side of the rear face 3b of the skin 3 has been described. It is a matter of course that the same method as described above can be applied to a case where the linear groove 6 is processed to the side of the front face 3a of the skin 3.

In the above embodiment, the case where the processing position by the ultrasonic processing apparatus 4 is subjected to only the initial adjustment in accordance with the thickness T of the skin 3 has been described. Alternatively, in the case where a skin 3 in which the residual thickness t in the actual ultrasonic processing may vary by a degree larger than an allowable error with respect to a target value is to be processed, it is preferable that the position adjusting mechanism 5 is operated to perform a feedback adjustment so that the residual thickness t is always in an allowable error range. Herein, the position adjusting mechanism 5 mechanically operates, and hence such a feedback adjustment can be easily realized.

### Industrial Applicability

As described above, the invention provides the following technique. A wide linear groove which has a residual portion of a predetermined thickness of a bottom portion is processed to a rear-face side of a resin skin which is fixedly held so that the front face is closely in contact with a flat face of a surface table, by an ultrasonic processing apparatus. Thereafter, an image of the residual portion of the bottom portion of the processed linear groove is taken in one direction on the groove opening side by using a laser displacement sensor and CCD camera. The thickness of the residual portion is measured by processing the taken image, and recorded and stored. Therefore, measurement and recording of the thickness of the residual portion of the bottom portion of the linear groove can be performed very easily, efficiently, and accurately in steps continuous to the groove processing, thereby enabling the quality control to be adequately performed.

## Claims

1. A method of processing a linear groove to an air bag portion of a resin skin for a vehicle in a condition where a predetermined thickness is left, and measuring and recording a thickness of a residual portion of a bottom portion of a processed linear groove, **characterized in that**
a linear groove is processed to another face of a skin which is fixedly held so that one of front and rear face is closely in contact with a flat face, by using a groove processing apparatus which is disposed on a side of the other face, in a condition where said groove is wide and a predetermined thickness is left in a bottom portion of said groove,
an image of a residual portion of said bottom portion of said linear groove is then taken from an opening side of said processed linear groove by using a laser displacement sensor and CCD camera;
the thickness of said residual portion is measured by processing the taken image; and a measured value is recorded.

2. A method of processing a linear groove to a skin for a vehicle and measuring and recording a residual thickness according to claim 1, wherein, as said groove processing apparatus, an ultrasonic processing apparatus which applies ultrasonic vibration to said skin to sequentially fuse and remove a resin for said skin is used.

3. A method of processing a linear groove to a skin for a vehicle and measuring and recording a residual thickness according to claim 1, wherein said linear groove is processed to a rear-face side of said skin.

4. A method of processing a linear groove to a skin for a vehicle and measuring and recording a residual thickness according to claim 2, wherein said linear groove is processed to a rear-face side of said skin.

5. A method of processing a linear groove to a skin for a vehicle and measuring and recording a residual thickness according to claim 1, wherein said laser displacement sensor and CCD camera emits a large number of laser spots of a minute diameter from a side of an opening portion of said processed linear groove, and takes an image of said residual portion while detecting displacements of multiple points; the taken image is processed to find a maximum displacement point from displacements of said multiple points, and a minimum thickness of said residual portion is measured; and a measure value is totalized and recorded for each skin.

6. A method of processing a linear groove to a skin for a vehicle and measuring and recording a residual thickness according to claim 2, wherein said laser displacement sensor and CCD camera emits a large number of laser spots of a minute diameter from a side of an opening portion of said processed linear groove, and takes an image of said residual portion while detecting displacements of multiple points; the taken image is processed to find a maximum displacement point from displacements of said multiple points, and a minimum thickness of said residual portion is measured; and a measure value is totalized and recorded for each skin.

7. An apparatus for processing a linear groove to an air bag portion of a resin skin for a vehicle in a condition where a predetermined thickness is left, and measuring and recording a thickness of a residual portion of a bottom portion of a processed linear groove, **characterized in that** said apparatus comprises:
a surface table which fixedly holds said skin so that one of front and rear faces thereof is closely in contact with a flat face;
a groove processing apparatus which is disposed on a side of another face of said skin, and which processes a linear groove to the side of the face in a condition where said groove is wide and a predetermined thickness is left in a bottom portion;
a processing position moving mechanism which relatively moves said groove processing apparatus and said surface table in a direction of a linear groove to be processed;
a laser displacement sensor and CCD camera which is disposed on a lower side in a moving direction of said groove processing apparatus, and which takes an image of a residual portion of a bottom portion of said linear groove from an opening side of said processed linear groove; and
image processing means and recording means for measuring a thickness of said residual portion by processing the taken image, and recording a measured value.

8. An apparatus for processing a linear groove to a skin for a vehicle and measuring and recording a residual thickness according to claim 7, wherein said groove processing apparatus is an ultrasonic processing apparatus which applies ultrasonic vibration to said skin to sequentially fuse and remove a resin for said skin.

9. An apparatus for processing a linear groove to a skin for a vehicle and measuring and recording a residual thickness according to claim 7, wherein said laser displacement sensor and CCD camera emits a large number of laser spots of a minute diameter from a side of an opening portion of said processed linear groove, and takes an image of said residual portion while detecting displacements of multiple points, and is configured so as to find a maximum displacement point from displacements of the multiple points and measure a minimum thickness of said residual portion by processing the taken image, and said image processing means and recording means are configured so as to totalize and record a measured value of the minimum thickness of said residual portion for each skin.

10. An apparatus for processing a linear groove to a skin for a vehicle and measuring and recording a residual thickness according to claim 8, wherein said laser displacement sensor and CCD camera emits a large number of laser spots of a minute diameter from a side of an opening portion of said processed linear groove, and takes an image of said residual portion while detecting displacements of multiple points, and is configured so as to find a maximum displacement point from displacements of the multiple points and measure a minimum thickness of said residual portion by processing the taken image, and said image processing means and recording means are configured so as to totalize and record a measured value of the minimum thickness of said residual portion for each skin.

11. An apparatus for processing a linear groove to a skin for a vehicle and measuring and recording a residual thickness according to claim 8, wherein said ultrasonic processing apparatus is configured by an ultrasonic oscillator with an oscillating frequency of 20 to 40 KHz, an ultrasonic transducer, and an oscillating horn in which a cutting blade is cut, and said oscillating horn is exchangeably attached to said ultrasonic transducer.
